# EUROPÄISCHE PATENTSCHRIFT

(11) **EP 2 255 325 B1**
(45) Veröffentlichungstag und Bekanntmachung des Hinweises auf die Patenterteilung: **08.10.2014**
(21) Anmeldenummer: 09719713.1
(22) Anmeldetag: 02.01.2009
(51) Int. Cl.: G06K 19/077

(54) **DOKUMENT MIT EINER EMISSIVEN ANZEIGEVORRICHTUNG**
DOCUMENT HAVING AN EMISSIVE DISPLAY DEVICE
DOCUMENT POURVU UN DISPOSITIF D' AFFICHAGE ÉMISSIF

(30) Priorität: 14.03.2008 DE 102008000676
(43) Veröffentlichungstag der Anmeldung: 01.12.2010
(73) Patentinhaber: Bundesdruckerei GmbH, 10958 Berlin (DE)
(72) Erfinder: PAESCHKE, Manfred, 16348 Wandlitz (DE); PFLUGHOEFFT, Malte, 13347 Berlin (DE); MUTH, Oliver, 12277 Berlin (DE); FISCHER, Jörg, 13053 Berlin (DE); LEOPOLD, André, 10119 Berlin (DE)
(74) Vertreter: Richardt Patentanwälte PartG mbB
(86) Internationale Anmeldenummer: PCT/EP2009/050014
(87) Internationale Veröffentlichungsnummer: WO 2009/112290

(56) Entgegenhaltungen:
- WO-A-2007/048855

## Beschreibung

Die Erfindung bezieht sich auf ein Dokument, insbesondere ein Wert- oder Sicherheitsdokument, mit einer emissiven Anzeigevorrichtung.

Dokumente mit einer integrierten elektronischen Schaltung sind aus dem Stand der Technik an sich in verschiedener Form bekannt. Beispielsweise gibt es Wert- und Sicherheitsdokumente in überwiegend papierbasierter Form, wie zum Beispiel als Banknote, als elektronischen Reisepass, oder als kunststoffbasierte Chipkarte, insbesondere als sogenannte Smart Card, in kontaktbehafteter, kontaktloser oder Dual-Interface Ausführung. Hierzu wird insbesondere auf die DE 10 2005 025 806 verwiesen.

Insbesondere sind verschiedene Funk-Erkennungssysteme für solche Dokumente aus dem Stand der Technik bekannt, die auch als Radio Frequency Identification (RFID) Systeme bezeichnet werden. Vorbekannte RFID-Systeme beinhalten im Allgemeinen zumindest einen Transponder und eine Sende-Empfangseinheit. Der Transponder wird auch als RFID-Etikett, RFID-Chip, RFID-Tag, RFID-Label oder Funketikett bezeichnet; die Sende-Empfangseinheit wird auch als Lesegerät, Leseeinrichtung oder Reader bezeichnet. Ferner ist oft die Integration mit Servern, Diensten und sonstigen Systemen, wie zum Beispiel Kassensystemen oder Warenwirtschaftssystemen über eine so genannte Middle Ware vorgesehen.

Die auf einem kontaktlosen, beispielsweise einem RFID-Transponder gespeicherten Daten werden über Radiowellen verfügbar gemacht. Bei niedrigen Frequenzen geschieht dies induktiv über ein Nahfeld, bei höheren Frequenzen über ein elektromagnetisches Fernfeld. Die Übertragung von Daten bei der Kommunikation eines Lesegeräts mit einem RFID-Transponder erfolgt über Radiowellen. Je nach System erfolgt sie über das Nah- oder Fernfeld.

Ein RFID-Transponder beinhaltet üblicherweise einen Mikrochip und eine Antenne, die in einem Träger oder Gehäuse untergebracht oder auf ein Substrat aufgedruckt sind. Aktive RFID-Transponder verfügen im Gegensatz zu passiven Transpondern ferner über eine Energiequelle, wie zum Beispiel eine Batterie.

RFID-Transponder sind für verschiedene Dokumente einsetzbar, insbesondere in Chipkarten, beispielsweise zur Realisierung einer elektronischen Geldbörse oder für Electronic Ticketing. Des Weiteren werden diese in Papier oder Kunststoff, wie zum Beispiel in Wert- und Sicherheitsdokumenten, insbesondere Geldscheinen und Ausweisdokumenten, integriert.

Aus der DE 201 00 158 U1 ist beispielsweise eine Identifikations- und Sicherheitskarte aus laminierten und / oder gespritzten Kunststoffen bekannt, die einen integrierten Halbleiter mit einer Antenne zur Durchführung eines RFID-Verfahrens beinhaltet. Aus der DE 10 2004 008 841 A1 ist ferner ein buchartiges Wertdokument, wie zum Beispiel ein Passbuch bekannt geworden, welches eine Transpondereinheit beinhaltet.

Solche Sicherheits- oder Wertdokumente können eine integrierte Anzeigevorrichtung aufweisen, wie es z.B. aus DE 10 2005 030 626 A1, DE 10 2005 030 627 A1, DE 10 2005 030 628 A1, WO 2004/080100 A1, EP 1 023 692 B1, DE 102 15 398 B4, EP 1 173 825 B1, EP 1 230 617 B1, EP 1 303 835 B1, EP 1 537 528 B1, WO 03/030096 A1, EP 0 920 675 B1, US 6,019,284, US 6,402,039 B1, WO 99/38117 bekannt ist.

Sicherheits- oder Wertdokumente können mit einer kontaktbehafteten oder kontaktlosen Schnittstelle, beispielsweise einem RFID-Interface, ausgestattet sein oder mit einer Schnittstelle, die sowohl eine drahtgebundene als auch eine drahtlose Kommunikation mit einem Chipkarten-Terminal zulässt. Im letzteren Fall spricht man auch von so genannten Dual-Interface Chipkarten. Chipkarten-Kommunikationsprotokolle und -verfahren sind zum Beispiel in der Norm ISO 7816, ISO 14443, ISO 15763 festgelegt.

Aus der WO 2007/048855 A1 ist ein Dokument mit einer Anzeigevorrichtung bekannt. Die Anzeigevorrichtung hat eine optische Schicht zur autostereoskopischen Erzeugung eines dreidimensionalen Bildes. Die optische Schicht kann aufgedruckt sein. Die optische Schicht ist so ausgebildet, dass bei Wiedergabe eines ersten Bildes durch eine Anzeigeschicht die aufgedruckten Bildelemente eines zweiten Bildes der optischen Schicht gut visuell wahrnehmbar sind, damit das dreidimensionale Bild autostereoskopisch erzeugt werden kann. Hierbei sind sowohl das Bild der Anzeigeschicht als auch das aufgedruckte Bild während des Betriebes der Anzeigeschicht gleichzeitig sichtbar.

Der Erfindung liegt demgegenüber die Aufgabe zugrunde, ein verbessertes Dokument, insbesondere ein Wert- oder Sicherheitsdokument, mit einer Anzeigevorrichtung zu schaffen.

Die der Erfindung zugrunde liegende Aufgabe wird mit den Merkmalen des Patentanspruchs 1 gelöst. Ausführungsformen der Erfindung sind in den abhängigen Patentansprüchen angegeben.

Nach Ausführungsformen der Erfindung hat das Dokument einen elektronischen Speicher zur Speicherung von Bilddaten. Die Bilddaten können ein einzelnes Bild, mehrere Bilder oder eine Bildsequenz beinhalten. Alternativ kann der Speicher Daten und/oder Algorithmen zur Erzeugung von Bilddaten enthalten.

Unter "Bilddaten" werden hier alle Daten verstanden, die sich zur Wiedergabe auf einer Anzeigevorrichtung eignen. Insbesondere können die Bilddaten ein oder mehrere Aufnahmen, insbesondere Gesichtsbilder, einer Person beinhalten und/oder textuelle Angaben, optisch maschinenlesbare Informationen, ein- oder zweidimensionale Barcodes oder dergleichen.

Das Dokument hat eine emissive Anzeigevorrichtung zur Wiedergabe der Bilddaten. Unter einer emissiven Anzeigevorrichtung wird eine ausstrahlende Anzeigevorrichtung verstanden, d.h. eine Anzeige, die als Strahlungsquelle wirkt. Eine solche emissive Anzeige hat insbesondere den Vorteil, dass sie auch im Dunkeln gut lesbar ist. Eine emissive Anzeige benötigt allerdings eine Energieversorgung, damit sie die Strahlungsenergie für die Anzeige der Bilddaten abgeben kann. Dementsprechend hat das Dokument Energieversorgungsmittel zur Versorgung der Anzeigevorrichtung mit elektrischer Energie.

Über der Anzeigevorrichtung ist eine optische Schicht angeordnet, wobei die optische Schicht zumindest ein Bild trägt, und wobei die optische Schicht so ausgebildet ist, dass das Bild dann optimal visuell wahrnehmbar ist, wenn die Anzeigevorrichtung nicht mit der elektrischen Energie versorgt wird. Die optische Schicht ist also so ausgebildet, dass sie dann, wenn die Anzeigevorrichtung eingeschaltet ist, also Strahlungsenergie abgibt, nicht oder kaum visuell wahrnehmbar ist, wohingegen die optische Schicht visuell wahrnehmbar ist, wenn die Anzeigevorrichtung nicht mit der elektrischen Energie versorgt wird, also im wesentlichen keine Strahlungsenergie abgibt.

Mit anderen Worten ist die optische Schicht so ausgebildet, dass sie vor einem dunklen, insbesondere schwarzen Hintergrund, der durch die Anzeigevorrichtung gebildet wird, wenn diese ausgeschaltet ist, gut visuell wahrnehmbar ist, wohingegen sie vor einem hellen, leuchtenden Hintergrund, wie er durch die Anzeigevorrichtung gebildet wird, wenn diese eingeschaltet ist, nicht oder kaum visuell wahrnehmbar ist.

Diese Ausbildung der optischen Schicht hat insbesondere den Vorteil, dass im Bereich der Anzeigevorrichtung auch dann ein Bild zu sehen ist, wenn die Anzeigevorrichtung nicht mit elektrischer Energie versorgt wird oder versorgt werden kann. Wenn es sich bei dem Dokument beispielsweise um ein ID-Dokument, wie zum Beispiel einen elektronischen Reisepass, Personalausweis oder Führerschein, handelt, so ist eine Sichtprüfung auch dann möglich, wenn keine Energieversorgung für die Anzeigevorrichtung zur Verfügung steht.

Nach einer Ausführungsform der Erfindung ist die emissive Anzeigevorrichtung so ausgebildet, dass sie einen schwarzen Hintergrund für die optische Schicht bildet, wenn die Anzeigevorrichtung nicht mit elektrischer Energie versorgt wird. Ein schwarzer, d.h. die einfallende Strahlung absorbierender, Hintergrund führt dabei zu einer maximalen Sichtbarkeit der vor dem schwarzen Hintergrund befindlichen optischen Schicht.

Nach einer Ausführungsform der Erfindung handelt es sich bei der Anzeigevorrichtung um, ein OLED-Display oder ein hintergrundbeleuchtetes Display, zum Beispiel ein Flüssigkristall-Display. Solche Displays sind ohne elektrische Energieversorgung dunkel, d.h. sie bilden den strahlungsabsorbierenden Hintergrund für die optische Schicht, sodass die optische Schicht mit hinreichendem Kontrast für das menschliche Auge ohne Hilfsmittel wahrnehmbar ist.

Nach einer weiteren Ausführungsform der Erfindung handelt es sich um ein transparentes bistabiles Display, welches eine Hintergrundbeleuchtung und dahinter einen schwarzen Hintergrund aufweist. Da das Display zwischen schwarz und transparent vor einem schwarzen Hintergrund erscheint, ist das dargestellte Bild ohne die Hintergrundbeleuchtung nicht oder nur sehr eingeschränkt wahrnehmbar. Diese Ausführungsform hat den Vorteil, dass nur die Hintergrundbeleuchtung mit Energie versorgt werden muss, damit das zweite Bild betrachtet werden kann, wohingegen eine Ansteuerung des Displays nur zur Änderung des angezeigten Inhalts notwendig ist.

Nach einer Ausführungsform der Erfindung handelt es sich bei der optischen Schicht um ein Hologramm, insbesondere ein individuelles Volumen-Hologramm. Der Kontrast und damit die Sichtbarkeit eines Hologramms hängt stark von dem Hintergrund ab. Insbesondere ein schwarzer Hintergrund, wie er durch die ausgeschaltete Anzeigevorrichtung zur Verfügung gestellt wird, ermöglicht eine hervorragende Sichtbarkeit des Hologramms. Ein selbststrahlender Hintergrund, wie er durch die eingeschaltete Anzeigevorrichtung realisiert wird, verringert dagegen die Sichtbarkeit des Hologramms drastisch, sodass es nicht oder kaum visuell wahrnehmbar ist.

Dies hat den Vorteil, dass einerseits das Hologramm visuell wahrnehmbar ist, wenn die Anzeigevorrichtung nicht mit elektrischer Energie versorgt wird, um beispielsweise eine Sichtprüfung des Dokuments auch in diesem Fall zu ermöglichen, und dass andererseits das Hologramm nicht oder kaum die Bildwiedergabe der Bilddaten auf der Anzeigevorrichtung stört oder verfälscht, wenn die Anzeigevorrichtung mit elektrischer Energie versorgt wird.

Das Hologramm kann hierbei so ausgeführt sein, dass es niedrige Beugungseffizienzen zwischen 10% und 50% und damit Bildhelligkeiten zeigt. Vor einem schwarzen Hintergrund ist es immer noch sehr gut sichtbar, ansonsten jedoch nicht. Dies gelingt z.B. durch Wellenlängenmultiplexing bei passender Filmdicke, z.B. 10 µm und erreichbarer Brechungsindexmodulation des Materials, z.B. 0,03. Durch Verwendung von Wellenlängenmultiplexing passender Wellenlängen, z.B. im roten, grünen und blauen Spektralbereich, gelingt es auch diese Weise gleichzeitig, Bilder im einem Echtfarbeindruck als Hologramm zu speichern.

Das Hologramm ist bevorzugt personalisiert, kann aber auch individuell, z.B. in Form einer Ausweisnummer, oder mit einem statischen Muster versehen sein, das für alle Dokumente identisch ist. Besonders bevorzugt sind Kombinationen hieraus, die sich sinnhaft im Dokument integrieren lassen. Zum Beispiel beschreibt DE 102007016777.8 die Applikation einer Sicherheitsfolie, z.B. eines Volumenhologramms, über ein Displaymodul sowie den benachbarten Teil des Dokuments als Schutz gegen Austausch des Moduls. Eine Kombination von personalisierten und individuellen Hologrammen kann in diesem Fall also z.B. durch ein holografisches Lichtbild über dem Lichtbildbereich sowie einem Muster, den Randbereich des Displaymoduls sowie den daran anschließenden Bereich des Dokumentenkörpers bedeckt, gebildet sein.

Das Hologramm kann größer als die Anzeigefläche sein und in den Kartenkörper rein gehen oder auf ihm aufgeklebt sein und nicht nur auf der Anzeigevorrichtung. Die Anzeigevorrichtung kann in dem Dokument integriert sein und es kann eine gemeinsame Deckfolie geben, die das Hologramm und die Anzeigevorrichtung abdeckt. Insbesondere kann das Hologramm gar nicht unmittelbar auf die Anzeigevorrichtung geklebt sein, sondern z.B. vollflächig über die Oberfläche des Dokuments. Die gilt entsprechend für andere Techniken zum Aufbringen des Bildes, wie z.B. durch Bedrucken.

Nach einer Ausführungsform der Erfindung ist das Hologramm auf die Anzeigevorrichtung aufgeklebt. Hierfür sind verschiedene Haftvermittler geeignet, insbesondere die aus der DE 10 2006 048 646.9**_**derselben Anmelderin offenbarte Haftvermittlerschicht. Je nach Dokumentenaufbau kann das Hologramm auch nicht direkt, sondern lateral beabstandet auf das Dokument beklebt sein und zwar so, dass die relevanten Teile des Hologramms sich weiterhin über der Anzeigevorrichtung befinden.

Weiterhin kann im Anschluss eine kratzfeste Schicht, z.B. in Form eines Lackes oder einer Folie, aufgebracht werden, um die optische Schicht gegen Abrieb während der Gültigkeitsdauer des Dokuments zu schützen.

Nach einer Ausführungsform hat die optische Schicht eine flüssigkristalline Farbe. Bei dieser Ausführungsform macht sich die Erfindung den Umstand zunutze, dass flüssigkristalline Farben die Eigenschaft haben, dass sie vor einem dunklen Hintergrund gut sichtbar, vor einem selbststrahlenden Hintergrund dagegen nicht oder kaum sichtbar sind. Insbesondere kann es sich um eine Farbe handeln, die cholesterische Flüssigkristalle beinhaltet.

Nach einer Ausführungsform der Erfindung beinhaltet die optische Schicht ein cholesterisches Polymer, d.h. eine Polymer welches eine cholesterische flüssigkristalline Phase ausbildet.

Nach einer Ausführungsform der Erfindung hat die optische Schicht eine Farbe, die Glimmerpartikel beinhaltet. Die Glimmerpartikel können mit Titandioxid (TiO₂) und/oder Siliziumdioxid (SiO₂) beschichtet sein. Solche Farben auf Glimmer-Basis haben ein sehr ausgeprägtes Kontrastverhalten, d.h. sie sind vor einem dunklen Hintergrund gut und vor einem selbststrahlenden Hintergrund nicht oder kaum visuell wahrnehmbar.

Nach einer Ausführungsform der Erfindung hat die optische Schicht eine Farbe, die mit einem geringen Farbdeckungsgrad von beispielsweise weniger als 20 %, insbesondere weniger als 10 %, vorzugsweise weniger als 5 % aufgebracht ist. Unter dem "Farbdeckungsgrad" wird hier das Verhältnis der mit der Farbe bedeckten Fläche eines Bildpunkts zur Gesamtfläche des Bildpunkts verstanden, d.h. also der Prozentsatz der Fläche eines Bildpunkts, der mit Farbe bedeckt ist. Zum Aufbringen der Farbe kann zunächst eine transparente Folie mit einer Inkjet-Farbe mit geringem Farbdeckungsgrad bedruckt werden. Die transparente Folie wird dann auf das Display aufgebracht.

Nach einer Ausführungsform erfolgt das Aufbringen der Farbe, durch welche die optische Schicht gebildet wird, drucktechnisch, insbesondere mittels Digitaldruck.

Nach einer Ausführungsform der Erfindung wird die Farbe mittels Thermotransferdruck, Thermosublimationsdruck, Tintenstrahldruck oder einer anderen Personalisierungstechnik auf die Anzeigevorrichtung aufgebracht.

Nach einer Ausführungsform der Erfindung beinhalten die Bilddaten dasselbe Bild, welches die optische Schicht trägt. Dies hat den Vorteil, dass dieses Bild auch dann visuell wahrnehmbar ist, wenn die Anzeigevorrichtung nicht mit elektrischer Energie versorgt wird.

Nach einer Ausführungsform der Erfindung beinhalten die Bilddaten ein Bild, welches von dem Bild der optischen Schicht verschieden ist. Hier ist besonders vorteilhaft, dass die Wiedergabe der Bilddaten nicht durch das Bild der optischen Schicht beeinträchtigt wird, da dieses von der emissiven Anzeigevorrichtung überstrahlt und daher nicht oder kaum visuell wahrnehmbar ist.

Nach einer Ausführungsform der Erfindung handelt es sich bei dem Dokument um ein ID-Dokument. Für eine Sichtprüfung des ID-Dokuments trägt die optische Schicht ein Gesichtsbild, vorzugsweise ein Gesichtsbild des Inhabers des Dokuments in Frontalansicht. Die Bilddaten können dasselbe oder ein anderes Gesichtsbild des Trägers des Dokuments in Frontalansicht und/oder ein oder mehrere Gesichtsbilder in seitlicher Ansicht beinhalten. Wenn die Anzeigevorrichtung mit elektrischer Energie versorgt wird, so können die Gesichtsbilder, die in den Bilddaten abgespeichert sind, in Form einer Bildsequenz ausgegeben werden.

Die Wiedergabe einer Bildsequenz mit Bildern des Inhabers des Wert- oder Sicherheitsdokuments aus unterschiedlichen Ansichten hat gegenüber einer statischen Anzeige eines einzigen zweidimensionalen Bildes den Vorteil, dass die Verifikation des Inhabers des Wert- oder Sicherheitsdokuments dadurch sicherer wird. Es hat sich nämlich herausgestellt, dass oftmals das üblicherweise in einem Ausweisdokument beinhaltete frontale Gesichtsbild für eine sichere Verifikation des Dokumenteninhabers alleine nicht optimal ist. Zur Erhöhung der Sicherheit sowohl bei der visuellen Verifikation,.zum Beispiel durch einen Grenzbeamten oder Polizisten, als auch der maschinellen Verifikation mit Hilfe einer Leseeinrichtung, werden erfindungsgemäß daher zumindest zwei Bilder des Inhabers in einer Bildsequenz nacheinander auf der Anzeigevorrichtung wiedergegeben. Dadurch lassen sich insbesondere geringe False Rejection Rates (FRR) und False Acceptance Rates (FAR) bei der maschinellen Verifikation erreichen. Ein weiterer Vorteil ist, dass die Verifikation des Inhabers durch die Verwendung mehrerer Ansichten erleichtert wird.

Nach einer Ausführungsform der Erfindung beinhaltet das Dokument einen Energiespeicher, wie zum Beispiel eine Primärzelle, d.h. eine Batterie, oder eine Sekundärzelle, d.h. einen wiederaufladbaren Akkumulator, einen Kondensator als Ladungsspeicher oder dergleichen. Um eine schnelle Entleerung des Energiespeichers zu vermeiden, wird die Anzeigevorrichtung nicht permanent mit elektrischer Energie versorgt. Zum Einschalten der Energieversorgung hat das Dokument ein Betätigungselement, wie zum Beispiel einen Druckknopf oder dergleichen, sodass durch Betätigung dieses Betätigungselements die Energieversorgung für die Anzeigevorrichtung ein- und ausgeschaltet werden kann. Von Vorteil ist hier insbesondere, dass auch bei ausgeschalteter Energieversorgung oder wenn der Energiespeicher leer ist, eine Sichtprüfung des Dokuments aufgrund des Bildes der optischen Schicht möglich ist.

Nach einer Ausführungsform der Erfindung hat das Dokument eine Schnittstelle zum Einkoppeln elektrischer Energie von einer externen Energiequelle. Das Einkoppeln der elektrischen Energie kann kontaktbehaftet oder kontaktlos (Antennen sind nicht immer drahtlos!) auf Basis kapazitiver oder induktiver Kopplung erfolgen. Bevorzugt wird eine elektromagnetische Kopplung verwendet. Beispielsweise kann die Schnittstelle eine Antenne oder Spule zum Einkoppeln der elektrischen Energie aufweisen.

Nach einer Ausführungsform der Erfindung ist die Schnittstelle als Kommunikations-Schnittstelle ausgebildet. Die Schnittstelfe dient dann also sowohl zum Einkoppeln von Energie als auch zum Datenaustausch mit einem Lesegerät, welches die externe Energiequelle bildet. Insbesondere können die Einkopplung der Energie und der Datenaustausch nach einem RFID-Verfahren erfolgen, beispielsweise in Anlehnung an die ISO 14443.

Nach einer Ausführungsform der Erfindung handelt es sich bei dem Dokument um ein Wert- oder Sicherheitsdokument, insbesondere ein ID-Dokument, wie zum Beispiel einen Personalausweis, Reisepass oder Firmenausweis, einen Berechtigungsnachweis, eine Kreditkarte, einen Frachtbrief, ein Visum oder dergleichen.

Nach einer Ausführungsform der Erfindung hat das Dokument einen Dokumentenkörper, der papierbasiert und/oder kunststoffbasiert ist. Insbesondere kann es sich bei dem Dokument um eine Chipkarte handeln.

Nach Ausführungsformen der Erfindung ist ein Bild vor einer Anzeigevorrichtung angeordnet, die im ausgeschalteten Zustand schwarz oder dunkel ist und deshalb den Kontrast des Bildes verstärkt. Dabei gibt es verschiedene Möglichkeiten zur Anordnung und zur Größe der Bildes sowie hinsichtlich des lateralen Aufbaus des Dokuments. Das Bild muß nur so an oder in dem Dokumentenkörper angeordnet sein, dass es sich im Strahlengang zwischen der Anzeigefläche der Anzeigevorrichtung und dem Auge eines Nutzers befindet. Die optische Schicht, die das Bild trägt, muss also nicht deckungsgleich zur Anzeigevorrichtung sein, sondern kann eine von der Anzeigefläche verschiedene Größe haben und/oder auch lateral von der Anzeigefläche beabstandet sein, wobei sich ein oder mehrere Zwischenschichten zwischen der Anzeigefläche und der optischen Schicht befinden können.
Nach Ausführungsformen der Erfindung ist die Anzeigevorrichtung in der Karte eingebettet; darüber befindet sich z.B. eine PC-Folie, und oben auf dem Dokument ist ein Identigram, wie z.B. mit Lichtbild, 3D-Adler, holografischer Machine Readable Zone (MRZ) oder dergleichen, vollflächig aufgebracht.

Nach Ausführungsformen der Erfindung befindet sich das holografische Lichtbild des Identigrams über der Anzeigevorrichtung. Es kann z.B. auf der Anzeigevorrichtung aufgeklebt sein.

Nach Ausführungsformen der Erfindung, ist das Bild visuell nicht wahrnehmbar, wenn die Anzeigevorrichtung mit der elektrischen Energie versorgt wird, so dass die Widergabe der Bilddaten das Bild überstrahlt. Unter dem "Bild", welches überstrahlt wird, wird hier auch ein Teil des Gesamtbildes, das die optische Schicht trägt, verstanden, d.h. das Dokument kann so ausgebildet sein, dass ein Teil des Gesamtbildes überstrahlt wird, und ein anderer Teil nicht. Es kann also ein Teil des Gesamtbildes visuell wahrnehmbar bleiben, wohingegen ein Teilbild visuell nicht wahrnehmbar ist, wenn die Anzeigevorrichtung mit der elektrischen Energie versorgt wird, und dann Licht abstrahlt. Unter dem "Bild" wird hier also auch ein Teilbild des Gesamtbildes, das die optische Schicht trägt verstanden.

Nach Ausführungsformen hat die Anzeigevorrichtung des Dokuments einen schwarzen Hintergrund.

Nach Ausführungsformen ist die optische Schicht der Anzeigevorrichtung so ausgebildet, dass das Bild dann visuell wahrnehmbar ist, wenn die Anzeigevorrichtung nicht mit der elektrischen Energie versorgt wird.

Im Weiteren werden Ausführungsformen der Erfindung mit Bezugnahme auf die Zeichnungen näher erläutert. Es zeigen:
- Figur 1: ein Blockdiagramm einer Ausführungsform eines erfindungsgemäßen Dokuments mit einem integrierten Energiespeicher,
- Figur 2: eine Draufsicht auf eine Ausführungsform eines erfindungsgemäßen Dokuments mit einer Schnittstelle,
- Figur 3: ein Blockdiagramm einer weiteren Ausführungsform eines erfindungsgemäßen Dokuments und eines Lesegeräts,
- Figur 4: eine schematische Darstellung einer von der Anzeigevorrichtung wiedergegebenen Bildsequenz,
- Figur 5: eine Ausführungsform eines erfindungsgemäßen Dokuments zu zwei unterschiedlichen Zeitpunkten.

Elemente der nachfolgenden Ausführungsformen, die einander entsprechen, sind jeweils mit denselben Bezugszeichen gekennzeichnet.

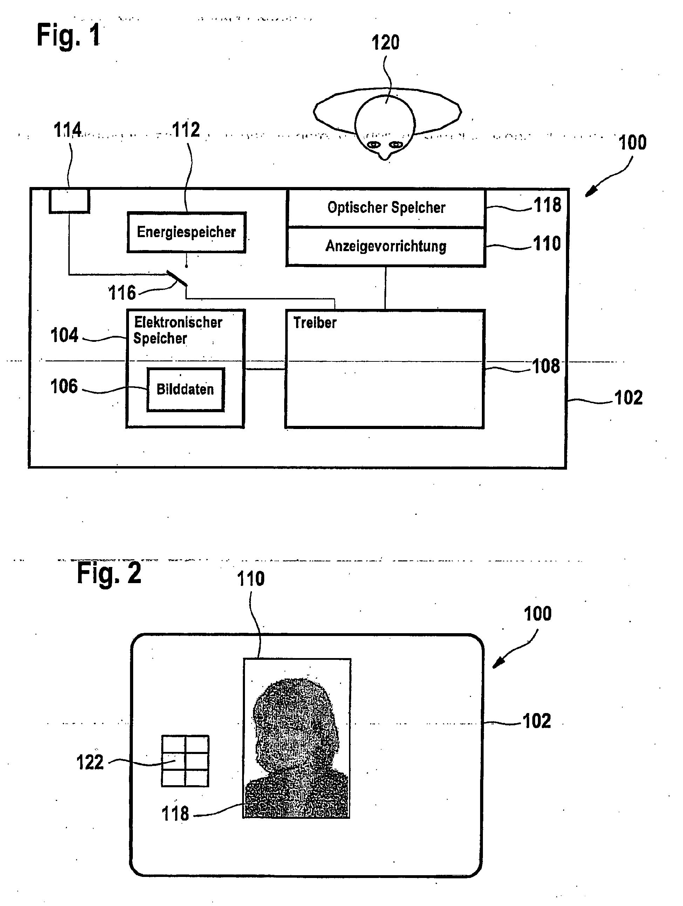

Die Figur 1 zeigt ein-Dokument 100. Bei dem Dokument 100 kann es sich um ein Wert- oder Sicherheitsdokument handeln, insbesondere ein ID-Dokument, wie zum Beispiel einen elektronischen Reisepass, Personalausweis, Visum oder dergleichen, aber auch um einen Führerschein, eine Bankkarte, eine Kreditkarte, eine Zutrittsausweis usw. Das Dokument 100 hat einen Dokumentenkörper 102, der papierbasiert- und/oder kunststoffbasiert ausgebildet sein kann. Insbesondere kann es sich bei dem Dokument 100 um ein buchförmiges oder kartenförmiges Dokument handeln, wie zum Beispiel um eine Chipkarte.

Das Dokument 100 hat einen elektronischen Speicher 104 zur Speicherung von Bilddaten 106. Die Bilddaten können ein oder mehrere Bilder beinhalten, insbesondere ein oder mehrere Gesichtsbilder eines Trägers des Dokuments.

Das Dokument 100 hat eine integrierte elektronische Schaltung, durch die ein Treiber 108 für eine Anzeigevorrichtung 110 gebildet wird. Der elektronische Speicher 104, der Treiber 108 und/oder die Anzeigevorrichtung 110 können als ein oder mehrere diskrete elektronische Komponenten oder als eine einzige integrierte elektronische Komponente ausgebildet sein.

Das Dokument 100 hat einen Energiespeicher 112, wie zum Beispiel eine Primärzelle oder eine Sekundärzelle. Um die Energieversorgung ein- und ausschalten zu können, hat das Dokument 100 ferner ein Bedienelement, wie zum Beispiel einen Taster 114, durch dessen Betätigung ein Schalter 116 geöffnet oder geschlossen wird. Über den Schalter 116 ist der Energiespeicher 112 mit dem Treiber 108 verbindbar. Dieses Bedienelement kann auch als verschleißfreier Sensor realisiert werden.

Die Anzeigevorrichtung 110 ist so ausgebildet, dass sie bei abgeschalteter Energieversorgung, d.h. wenn der Schalter 116 geöffnet ist, einen dunklen, vorzugsweise schwarzen Hintergrund aufweist. Wenn die Energieversorgung dagegen eingeschaltet ist, d.h. wenn der Schalter 116 geschlossen ist, wirkt die Anzeigevorrichtung 110 zur Wiedergabe der Bilddaten 106 als Strahlungsquelle, d.h. die Anzeigevorrichtung 110 ist selbstleuchtend. Mit anderen Worten handelt es sich bei der Anzeigevorrichtung 110 um eine emissive Anzeigevorrichtung. Beispielsweise handelt es sich bei der Anzeigevorrichtung 110 um ein Flüssigkristall-Display mit Hintergrundbeleuchtung oder ein OLED-Display.

Auf der Anzeigevorrichtung 110 befindet sich eine optische Schicht 118, durch welche hindurch ein Benutzer 120 die Anzeigevorrichtung 110 betrachten kann. Die optische Schicht 118 trägt zumindest ein Bild. Die optische Schicht 118 ist so ausgebildet, dass das Bild von dem Benutzer 120 dann visuell gut wahrnehmbar ist, wenn die Anzeigevorrichtung 110 nicht mit elektrischer Energie versorgt wird, d.h. wenn der Schalter 116 geöffnet ist. Nur dann, wenn die Anzeigevorrichtung 110 ausgeschaltet ist, bietet diese einen dunklen Hintergrund für die optische Schicht 118, sodass das Bild der optischen Schicht 118 mit hinreichendem Kontrast für den Benutzer 120 visuell wahrnehmbar ist.
Wenn dagegen die Anzeigevorrichtung 110 eingeschaltet ist, überstrahlt diese das Bild der optischen Schicht 118, sodass dieses nicht oder kaum von dem Benutzer 120 wahrnehmbar ist.

Insbesondere kann es sich bei der optischen Schicht 118 um ein Hologramm handeln, insbesondere ein individuelles Volumenhologramm mit einem Gesichtsbild des Trägers des Dokuments 100. Das Hologramm kann auf die Anzeigevorrichtung 110 aufgeklebt sein.

Bei der optischen Schicht 118 kann es sich auch um einen Aufdruck handeln. Der Aufdruck kann aus einer flüssigkristallinen Farbe bestehen, insbesondere einem cholesterischen flüssigkristallinen Polymer. Der Aufdruck, der die optische Schicht 118 bildet, kann auch mittels einer Farbe, die Glimmerpartikel beinhaltet, realisiert werden. Die Glimmerpartikel können mit Titandioxid und/oder Siliziumdioxid beschichtet sein.

Ferner kann der Aufdruck durch eine Farbe realisiert sein. Die Farbe ist mit einem geringen Farbdeckungsgrad von < 20 % auf der Anzeigevorrichtung 110 aufgebracht, sodass der Aufdruck visuell nicht oder kaum wahrnehmbar ist, wenn die Anzeigevorrichtung eingeschaltet ist und dadurch einen hell leuchtenden Hintergrund bildet.

Die Aufbringung des Aufdrucks auf die Anzeigevorrichtung kann durch verschiedene Personalisierungstechniken erfolgen, wie zum Beispiel mittels Digitaldruck, Thermotransferdruck, Thermosublimation, Tintenstrahldruck und dergleichen Verfahren.

Um eine schnelle Entladung des Energiespeichers 112 zu verhindern, wird ein Benutzer den Taster 114 nur dann betätigen, um den Schalter 116 zu schließen, wenn eine Wiedergabe der Bilddaten 106 auf der Anzeigevorrichtung 110 erforderlich ist, um beispielsweise eine Sichtprüfung des Dokuments 100 zu ermöglichen. Nachdem die Kontrolle erfolgt ist, wird der Taster 114 erneut betätigt, um den Schalter 116 wieder zu öffnen.

Alternativ kann der Schalter 116 auch so ausgebildet sein, dass er nach seiner Betätigung für einen gewissen vorgegebenen Zeitraum von zum Beispiel einigen Sekunden in seiner geschlossenen Position verharrt, um danach von selbst wieder zu öffnen. Dadurch erübrigt sich eine erneute Betätigung des Tasters 114 zum Öffnen des Schalters 116. Insbesondere kann der Schalter 116 als eine monostabile Kippstufe realisiert sein.

Auch wenn der Energiespeicher 112 leer ist, ist dennoch eine Sichtprüfung des Dokuments 100 möglich, und zwar mit Hilfe des Bildes, welches die optische Schicht 118 zeigt.

Die Figur 2 zeigt eine Draufsicht auf eine weitere Ausführungsform eines erfindungsgemäßen Dokuments 100. Bei dieser Ausführungsform ist das Dokument 100 als Chipkarte ausgebildet, beispielsweise als so genannte Smartcard. Das Dokument 100 hat ein Chipmodul 122, welches eine integrierte elektronische Schaltung beinhaltet, die beispielsweise den elektronischen Speicher 104 und den Treiber 108 (vgl. Ausführungsform der Figur 1) implementiert. Das Chipmodul 122 kann eine kontaktbehaftete, kontaktlose oder eine so genannte Dual-Interface-Schnittstelle aufweisen. Das Chipmodul 122 ist zum Beispiel in einer Kavität des Dokumentenkörpers 102 eingebettet.

Der Dokumentenkörper 102 hat zum Beispiel eine weitere Kavität, in der sich die Anzeigevorrichtung 110 mit der darüberlegenden optischen Schicht 118 befindet. Die Ansteuerung der Anzeigevorrichtung 110 erfolgt durch den integrierten elektronischen Schaltkreis des Chipmoduls 122; alternativ ist die Anzeigevorrichtung 110 in einer entsprechenden Kavität des Dokuments 100 als vollständig separate Einheit ausgebildet, die unabhängig von dem Chipmodul 122 funktioniert, und ihren eigenen Treiber und Bilddatenspeicher aufweist.

Vorzugsweise erfolgt zumindest die Energieversorgung der Anzeigevorrichtung 110 von dem Chipmodul 122, da dieses über seine Schnittstelle mit einer externen Energiequelle verbindbar ist, wie sie von einem Lesegerät, d.h. einem so genannten Chipkarten-Terminal, für das Dokument 100 zur Verfügung gestellt werden kann.

In der Ausführungsform der Figur 2 wird die optische Schicht 118 durch ein Gesichtsbild einer Person gebildet. Das Gesichtsbild kann in Form eines individuellen Volumenhologramms auf die Anzeigevorrichtung 110 aufgebracht sein, indem es dort beispielsweise mit einer Haftvermittlerschicht befestigt wird. Das Gesichtsbild kann auch auf die Anzeigevorrichtung 110 aufgedruckt werden. Für den Aufdruck kann eine flüssigkristalline Farbe verwendet werden, insbesondere ein Polymer, welches eine cholesterische flüssigkristalline Phase aufweist. Ferner kann das Gesichtsbild mittels einer Farbe auf Glimmer-Basis aufgebracht werden, insbesondere eine Farbe, die beschichtete Glimmerpartikel aufweist, insbesondere mit Titandioxid und/oder Siliziumdioxid beschichtete Glimmerpartikel. Bei der Farbe kann es sich auch um eine Inkjet-Farbe handeln, die mit geringem Farbdeckungsgrad aufgebracht ist.

Die Aufbringung des Gesichtsbilds auf die Anzeigevorrichtung kann durch verschiedene Personalisierungstechniken erfolgen, wie zum Beispiel mittels Digitaldruck, Thermotransferdruck, Thermosublimation, Tintenstrahldruck und dergleichen Verfahren.

So lange über die Schnittstelle des Chipmoduls 122 keine Energie in das Dokument 100 eingekoppelt wird, bleibt die Anzeigevorrichtung 110 dunkel. Vor diesem dunklen Hintergrund ist dann die optische Schicht 118, d.h. hier das Gesichtsbild, von einem Benutzer 120 (vgl. Figur 1) gut zu sehen, wenn dieser frontal -auf das Dokument 100 sieht. Dies hat den Vorteil, dass eine Sichtkontrolle des Dokuments 100 jederzeit möglich ist, und zwar auch dann, wenn kein Lesegerät für das Dokument 100 zur Verfügung steht.

Wenn hingegen ein Lesegerät für das Dokument verfügbar ist, so wird elektrische Energie von dem Lesegerät über die Schnittstelle des Chipmoduls 122 eingekoppelt, sodass die Anzeigevorrichtung 110 unmittelbar und/oder mittelbar über den Treiber 108 mit Energie vorsorgt wird, und daher die Bilddaten 106 (vgl. Figur 1) wiedergibt, wobei die Anzeigevorrichtung 110 als Strahlungsquelle wirkt. Vor dem durch die Anzeigevorrichtung 110 gebildeten hellen Hintergrund ist dann das Gesichtsbild der optischen Schicht 118 nicht oder kaum von dem Benutzer 120 visuell wahrnehmbar, da dieses von der Bildwiedergabe der Anzeigevorrichtung 110 überstrahlt wird.

Die Bilddaten 106, die von der Anzeigevorrichtung 110 wiedergegeben werden können, können dasselbe Gesichtsbild wie die optische Schicht 118 beinhalten und/oder ein oder mehrere andere Bilder, wie zum Beispiel zwei oder mehr Gesichtsbilder derselben Person aus verschiedenen Perspektiven und/oder im Klartext lesbare textuelle Informationen und/oder optisch maschinenlesbare Informationen, wie zum Beispiel ein ein- oder zweidimensionaler Barcode. Wenn die Bilddaten 106 mehrere Bilder beinhalten, so können diese gleichzeitig und/oder sequenziell auf der Anzeigevorrichtung 110 wiedergegeben werden, sobald die elektrische Energie über die Schnittstelle des Chipmoduls 122 eingekoppelt wird.

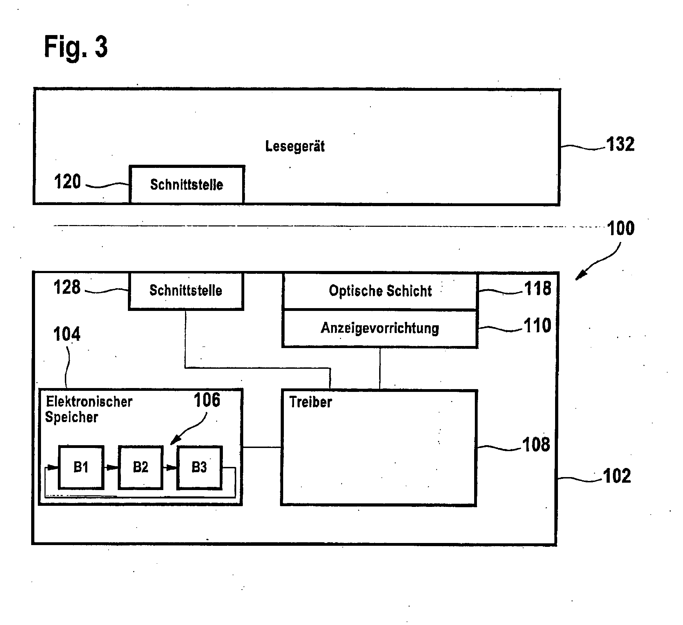

Die Figur 3 zeigt eine weitere Ausführungsform eines erfindungsgemäßen Dokuments 100.

Bei dieser Ausführungsform hat das Dokument 100 eine Schnittstelle 128 zum Austausch von Daten mit einer entsprechenden Schnittstelle 130 eines Lesegeräts 132, beispielsweise eines so genannten Chipkarten-Terminals. Die Schnittstellen 128, 130 können kontaktbehaftet, kontaktlos oder als Dual-Interface-Schnittstellen ausgebildet sein. Neben dem Aufbau einer Kommunikationsverbindung dient die Schnittstelle 130 auch zum Einkoppeln elektrischer Energie in die Schnittstelle 128 des Dokuments 100, damit dieses mit elektrischer Energie versorgt werden kann.

Bei der Ausführungsform der Figur 3 beinhalten die Bilddaten 106 eine Bildsequenz, die aus den Bildern B1, B2 und B3 besteht. Sobald elektrische Energie in die Schnittstelle 128 eingekoppelt wird, greift der Treiber 108 auf die Bilddaten 106 zu, und steuert die Anzeigevorrichtung 110 zur sequenziellen wiederholenden Wiedergabe der Bilddaten B1, B2, B3 an.

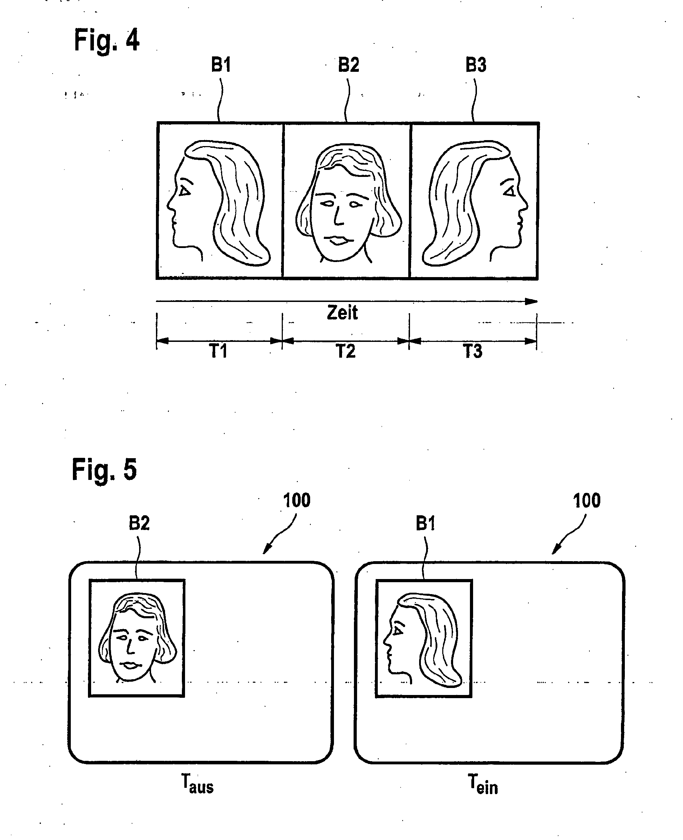

Die Figur 4 zeigt den zeitlichen Verlauf der Wiedergabe der Bilder B1, B2, B3 auf der Anzeigevorrichtung 110. Während eines Zeitintervalls T1 wird das Bild B1 der Bilddaten 106 auf der Anzeigevorrichtung 110 wiedergegeben. Während eines nachfolgenden Zeitintervalls T2 wird das Bild B2 der Bilddaten 106 wiedergegeben und während eines darauffolgenden Zeitintervalls T3 das Bild B3 der Bilddaten 106. Diese Wiedergabesequenz der Bilder B1, B2, B3 kann so lange wiederholt werden, wie elektrische Energie in die Schnittstelle 128 eingekoppelt wird. Die Zeitintervalle T1 bis T3 können gleich oder unterschiedlich lang sein; beispielsweise beträgt die Länge jedes Zeitinvervalls im Bereich zwischen 0,5 Sekunden und 2 Sekunden.

Bei dem Bild B1 kann es sich um das linke Gesichtsprofil einer Person handeln, bei dem Bild B2 um ein Gesichtsbild in Frontalansicht und bei dem Bild B3 um das rechte Gesichtsprofil. Besonders vorteilhaft ist es, wenn es sich bei den Bildern B1, B2, B3 um Gesichtsbilder derselben Person handelt, wobei die Gesichtsbilder aus jeweils unterschiedlichen Perspektiven aufgenommen sind, da hierdurch die Verifikation des Dokumenteninhabers erleichtert wird.

Die Figur 5 zeigt eine Ausführungsform des Dokuments 100 zu einem Zeitpunkt Tₐᵤₛ, zu dem keine Energieversorgung für die Anzeigevorrichtung 110 zur Verfügung steht, sowie zu einem Zeitpunkt Tₑᵢₙ, zu dem eine Energieversorgung für die Wiedergabe der Bilddaten 106 auf der Anzeigevorrichtung 110 zur Verfügung steht, d.h. zu dem Zeitpunkt Tₑᵢₙ ist bei der Ausführungsform der Figur 1 der Schalter 116 geschlossen bzw. bei der Ausführungsform der Figur 3 wird Energie in die Schnittstelle 128 eingekoppelt.

Bei dieser Ausführungsform ist das Bild B2 nicht nur in den Bilddaten 106 vorhanden, sondern es bildet auch die optische Schicht 118. Das heißt; das Bild B2 befindet sich entweder als Hologramm auf der Anzeigevorrichtung 110 oder es ist beispielsweise auf der Anzeigevorrichtung 110 aufgedruckt.

Zu dem Zeitpunkt Tₐᵤₛ bildet die Anzeigevorrichtung 110 einen dunklen Hintergrund, sodass das Bild B2 der optischen Schicht 118 visuell gut erkennbar ist. Zu dem Zeitpunkt Tₑᵢₙ wird dagegen die Anzeigevorrichtung 110 mit elektrischer Energie versorgt, sodass die Bilddaten 106, d.h. die Bildsequenz B1, B2, B3 wiederholend wiedergegeben wird, wobei zu dem in der Figur 5 dargestellten Zeitpunkt T1 gerade das Bild B1 wiedergegeben wird. Das Bild B2 der optischen Schicht ist dann nicht wahrnehmbar, da es von dem Bild B1, welches die Anzeigevorrichtung 110 wiedergibt, überstrahlt wird.

### Bezugszeichenliste

- 100: Dokument
- 102: Dokumentenkörper
- 104: elektronischer Speicher
- 106: Bilddaten
- 108: Treiber
- 110: Anzeigevorrichtung
- 112: Energiespeicher
- 114: Taster
- 116: Schalter
- 118: optische Schicht
- 120: Benutzer
- 122: Chipmodul
- 128: Schnittstelle
- 130: Schnittstelle
- 132: Lesegerät

## Patentansprüche

1. Dokument,
mit einem elektronischen Speicher (104) zur Speicherung von Bilddaten (106), und
mit einer emissiven Anzeigevorrichtung (110) zur Wiedergabe der Bilddaten, und mit Energieversorgungsmitteln (112, 114, 116; 128) zur Versorgung der Anzeigevorrichtung mit elektrischer Energie, und
mit einer optischen Schicht (118), die vor der Anzeigevorrichtung angeordnet ist, wobei die optische Schicht zumindest ein Bild trägt,
wobei die Anzeigevorrichtung ein OLED-Display, ein hintergrundbeleuchtetes Display, zum Beispiel ein Flüssigkristall-Display, oder ein transparentes bistablles Display ist,
**gekennzeichnet dadurch, dass**
das Bild wenigstens eines der Elemente der folgenden Gruppe aufweist:
o ein Hologramm,
o eine flüssigkristalline Farbe, und
o Glimmerpartikel.

2. Dokument nach einem der vorhergehenden Ansprüche, wobei die optische Schicht eine Farbe aufweist, die mit einem Farbdeckungsgrad von weniger als 20 %, insbesondere weniger als 10 %, vorzugsweise weniger als 5 % auf die Anzeigevorrichtung aufgebracht ist.

3. Dokument nach einem der Ansprüche 1 bis 2, wobei die optische Schicht aufgedruckt ist.

4. Dokument nach einem der vorhergehenden Ansprüche, wobei die optische Schicht personalisiert ist.

5. Dokument nach einem der vorhergehenden Ansprüche, wobei es sich bei dem Bild um ein Gesichtsbild handelt.

6. Dokument nach einem der vorhergehenden Ansprüche, wobei die Bilddaten ein oder mehrere Gesichtsbilder beinhalten.

7. Dokument nach einem der vorhergehenden Ansprüche, wobei die Bilddaten eine Bildsequenz beinhalten.

8. Dokument nach einem der vorhergehenden Ansprüche, wobei es sich bei dem Bild um ein Gesichtsbild aus einer ersten Perspektive handelt, und wobei die Bilddaten ein Gesichtsbild zumindest aus einer zweiten Perspektive beinhalten.

9. Dokument nach einem der vorhergehenden Ansprüche, wobei die Energieversorgungsmittel einen Energiespeicher (112) aufweisen.

10. Dokument nach Anspruch 9, mit einem Betätigungsmittel (116) zur Einschaltung der Energieversorgung.

11. Dokument nach einem der vorhergehenden Ansprüche, wobei die Energieversorgungsmittel zum Einkoppeln der elektrischen Energie von einer externen Energiequelle (132) ausgebildet sind.

12. Dokument nach einem der vorhergehenden Ansprüche mit einer Kommunikations-Schnittstelle (128) zur Kommunikation mit einem externen Lesegerät (132), wobei durch die Kommunikations-Schnittstelle die Energieversorgungsmittel gebildet werden.

13. Dokument nach einem der vorhergehenden Ansprüche, wobei das Dokument einen Dokumentenkörper (102) hat, der papier- und/oder kunststoffbasiert ausgebildet ist.

14. Dokument nach einem der vorhergehenden Ansprüche, wobei es sich um eine Chipkarte handelt.

## Claims

1. A document
comprising an electronic memory (104) for storing image data (106), and comprising an emissive display device (110) for reproducing the image data, and
comprising energy supply means (112, 114, 116; 128) for supplying the display device with electric energy, and
comprising an optical layer (118), which is disposed in front of the display device, wherein the optical layer carries at least one image,
wherein the display device is an OLED display, a backlit display, for example, a liquid-crystal display, or a transparent, bistable display,
**characterized in that**
the image comprises at least one of the elements of the following group:
∘ a hologram,
∘ a liquid-crystal color, and
∘ glimmer particles.

2. The document according to any one of the preceding claims, wherein the optical layer has a color, which is applied onto the display device with an extent of color coverage of less than 20%, in particular less than 10%, preferably less than 5%.

3. The document according to one of the claims 1 to 2, wherein the optical layer is printed on.

4. The document according to any one of the preceding claims, wherein the optical layer is personalized.

5. The document according to any one of the preceding claims, wherein the image is a facial image.

6. The document according to any one of the preceding claims, wherein the image data contain one or more facial images.

7. The document according to any one of the preceding claims, wherein the image data contain an image sequence.

8. The document according to any one of the preceding claims, wherein the image is a facial image from a first perspective, and wherein the image data contain a facial image at least from a second perspective.

9. The document according to any one of the preceding claims, wherein the energy supply means comprise an energy accumulator (112).

10. The document according to claim 9, comprising an actuating means (116) for switching on the energy supply.

11. The document according to any one of the preceding claims, wherein the energy supply means are designed to couple in the electric energy from an external energy source (132).

12. The document according to any one of the preceding claims, comprising a communication interface (128) for communication with an external reading device (132), wherein the energy supply means are formed by the communication interface.

13. The document according to any one of the preceding claims, wherein the document has a document body (102), which is based on paper and/or plastic.

14. The document according to any one of the preceding claims, wherein said document is a chip card.

## Revendications

1. Document,
avec une mémoire électronique (104) pour le stockage de données d'image (106), et
avec un dispositif d'affichage émissif (110) pour la reproduction de données d'image, et
avec des moyens d'alimentation en énergie (112, 114, 116 ; 128) pour l'alimentation du dispositif d'affichage en énergie électrique, et
avec une couche optique (118) agencée devant le dispositif d'affichage, la couche optique portant au moins une image,
dans lequel le dispositif d'affichage est un écran OLED, un écran rétroéclairé, par exemple un écran à cristaux liquides, ou un écran bistable transparent,
**caractérisé en ce que**
l'image comporte au moins l'un des éléments du groupe suivant :
o un hologramme,
o une couleur cristalline liquide
o des particules de mica.

2. Document selon l'une des revendications précédentes, dans lequel la couche optique comporte une couleur appliquée sur le dispositif d'affichage, avec un degré de couverture de couleur inférieur à 20%, en particulier inférieur à 10%, de préférence inférieur à 5%.

3. Document selon l'une des revendications 1 à 2, dans lequel la couche optique est imprimée.

4. Document selon l'une des revendications précédentes, dans lequel la couche optique est personnalisée.

5. Document selon l'une des revendications précédentes, dans lequel l'image est une image de visage.

6. Document selon l'une des revendications précédentes, dans lequel les données d'image contiennent une ou plusieurs images de visage.

7. Document selon l'une des revendications précédentes, dans lequel les données d'image contiennent une séquence d'images.

8. Document selon l'une des revendications précédentes, dans lequel l'image est une image de visage sous une première perspective, et dans lequel les données d'image contiennent une image de visage sous au moins une deuxième perspective.

9. Document selon l'une des revendications précédentes, dans lequel les moyens d'alimentation en énergie comportent un accumulateur d'énergie (112).

10. Document selon la revendication 9, avec un moyen d'actionnement (116) pour allumer l'alimentation en énergie.

11. Document selon l'une des revendications précédentes, dans lequel les moyens d'alimentation en énergie sont conçus pour le couplage de l'énergie électrique d'une source d'énergie externe (132).

12. Document selon l'une des revendications précédentes, avec une interface de communication (128) pour la communication avec un appareil de lecture externe (132), dans lequel les moyens d'alimentation en énergie sont formés par l'interface de communication.

13. Document selon l'une des revendications précédentes, dans lequel le document possède un corps de document (102) à base de papier et/ou de plastique.

14. Document selon l'une des revendications précédentes, dans lequel il s'agit d'une carte à puce.
